**Europäisches Patentamt**

**European Patent Office**

**Office européen des brevets**

(11) Veröffentlichungsnummer: **0 380 945**

**A2**

(12) **EUROPÄISCHE PATENTANMELDUNG**

(21) Anmeldenummer: **90100624.7**

(51) Int. Cl.5: **H04J 14/02**

(22) Anmeldetag: **12.01.90**

(30) Priorität: **31.01.89 DE 3902746**

(43) Veröffentlichungstag der Anmeldung:
**08.08.90 Patentblatt 90/32**

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**D-7000 Stuttgart 40(DE)**

(72) Erfinder: **Heidemann, Rolf, Dr.**
**Weinsberger Weg 14**
**D-7146 Tamm/W.(DE)**

(74) Vertreter: **Kugler, Hermann, Dipl.-Phys. et al**
**Standard Elektrik Lorenz AG Patent- und Lizenzwesen Postfach 30 09 29**
**D-7000 Stuttgart 30(DE)**

(54) **Optisches Breitband-Nachrichtenübertragungssystem, insbesondere für den Teilnehmeranschlussbereich.**

(57) Es sind optische Nachrichtenübertragungssysteme zur Übertragung einer Vielzahl von Breitband-Signalen, insbesondere Fernsehsignalen, über einen Lichtwellenleiter bekannt, bei denen die Signale Trägern mit verschiedenen Frequenzen durch Frequenzmodulation aufmoduliert und die modulierten Träger als Frequenzmultiplex-Signal übertragen werden. Bei den bekannten Systemen liegen die verwendeten Trägerfrequenzen in einem einzigen Frequenzband, das weniger als eine Oktave breit ist, was bedeutet, daß bei einer großen Zahl von zu übertragenden Signalen das Frequenzband in einem sehr hohen Frequenzbereich liegen muß.

Erfindungsgemäß werden Trägerfrequenzen verwendet, die in verschiedenen Frequenzbändern ($B_1$, $B_2$, $B_3$) liegen, wobei jedes höchstens eine Oktave breit ist und die verschiedenen Bänder um mindestens eine Oktave auseinanderliegen. Hierdurch ist die stufenweise Anpassung des Systems an den bestehenden Kanalbedarf möglich, unter Verwendung von für die einzelnen Frequenzbänder üblichen und erprobten übertragungstechnischen Einrichtungen.

FIG.2

## Optisches Breitband-Nachrichtenübertragungssystem, insbesondere für den Teilnehmeranschlußbereich

Die Erfindung betrifft ein System nach dem Oberbegriff des Patentanspruchs 1.

Ein derartiges System ist bekannt aus "Electronics Letters", 22nd Oct. 1987, Vol. 23, No. 22, Seiten 1196 bis 1198.

Die dort verwendeten Trägerfrequenzen liegen bei allen Beispielen in einem einzigen zusammenhängenden Frequenzband, das höchstens eine Oktave breit ist und in einem umso höheren Frequenzbereich liegt, je mehr Signale zu übertragen sind. Wenn beispielsweise nur vier Signale zu übertragen sind, so liegen die Träger in einem Frequenzband von 150 bis 300 MHz, und wenn beispielsweise 60 Signale zu übertragen sind, so liegen die 60 Träger in einem Frequenzband von 2,7 bis 5,2 GHz. Diese Art der Frequenzzuordnung stimmt überein mit einer Frequenzzuordnung, die aus IEEE Transactions and Communications, Vol. COM-29, NO.6, June 1981, Seiten 868 bis 885, insbesondere aus Fig. 13 auf Seite 878, bekannt ist. Das Modulationsverfahren ist dort die Amplitudenmodulation, und die Trägerfrequenzen liegen innerhalb einer einzigen Oktave in einem Frequenzband von 54 bis 108 MHz.

Nachteilig bei der bekannten Art, die Trägerfrequenzen zu wählen, ist, daß bei einer großen Anzahl von zu übertragenden Signalen nur Frequenzbänder im hohen Frequenzbereich, z.B. im GHz-Bereich, belegt werden können und daß daher Frequenzen in niedrigeren Bereichen, bei denen die Signalverarbeitung auch mit einfacheren Mitteln durchgeführt werden kann, nicht belegt werden.

Es ist daher die Aufgabe der Erfindung, ein System der genannten Art anzugeben, bei dem die Trägerfrequenzen anders als bei den bekannten Systemen gewählt sind.

Die Aufgabe wird wie im Patentanspruch 1 angegeben gelöst. Weiterbildungen ergeben sich aus den Unteransprüchen.

Die Erfindung wird nun anhand der Zeichnungen beispielsweise näher erläutert.

Es zeigen:

Fig. 1 eine Modulations- und Multiplexeinrichtung, z.B. für die Zentrale eines Kabelfernseh-Verteilnetzes,

Fig. 2 den Frequenzplan für das erfindungsgemäße System und

Fig. 3 die mit der Einrichtung nach Fig. 1 zusammenarbeitende Einrichtung in der Gegenstelle, z.B. bei Teilnehmern des Kabelfernseh-Verteilnetzes.

Die Erfindung wird im folgenden anhand eines Kabelfernseh-Verteilnetzes beschrieben, jedoch wird darauf hingewiesen, daß sie jegliche Anwendungsfälle umfaßt, bei denen eine Vielzahl von breitbandigen analogen oder digitalen Signalen von einem Punkt A zu einem oder mehreren Punkten B zu übertragen ist.

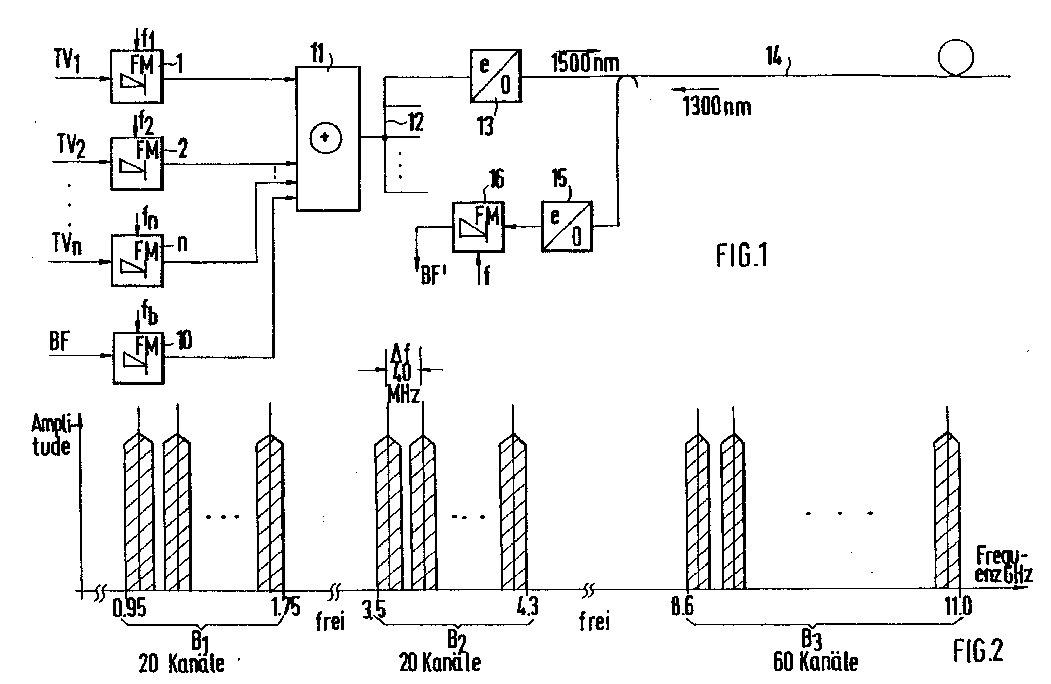

Von einer nicht gezeigten Kabelfernseh-Kopfstation, auch Kabelfernseh-Zentrale genannt, werden eine Anzahl von Fernsehsignalen, z.B. 36 Fernsehsignale, $TV_1$ bis $TV_n$ in der Basisbandlage in die Modulations- und Multiplexeinrichtung nach Fig. 1 eingegeben. Der Ausdruck "Fernsehsignal" ist im folgenden so zu verstehen, daß ein Signalgemisch enthaltend das Farbbildsignalgemisch, auch FBAS-Signal oder Farb-Videosignal genannt, und das Fernsehtonsignal gemeint ist. Es hat eine Bandbreite von etwa 6 MHz.

Auch ein hochauflösendes Fernsehsignal, meistens als HDTV-Signal (HDTV = High Definition Television) bezeichnet, ist hierunter zu verstehen. Dieses hat eine viel größere Bandbreite, z.B. 20 MHz, als ein gewöhnliches Fernsehsignal.

Jedes der Fernsehsignale $TV_1$ bis $TV_n$ wird in den Modulationseingang eines Frequenzmodulators eingegeben und dort durch Frequenzmodulation einem Träger aufmoduliert. Die Frequenzmodulatoren sind mit den Bezugszeichen 1 bis n versehen, und die Träger sind durch Trägerfrequenzen $f_1$ bis $f_n$ bezeichnet.

Falls von dieser Zentrale auch Bildfernsprech-Signale zu den Teilnehmern zu übertragen sind, so werden diese im einfachsten Falle als analoge Signale ebenso wie die Fernsehsignale einem Träger durch Frequenzmodulation aufmoduliert. Im Beispiel der Figur 1 ist ein Bildfernsprechsignal vorgesehen und mit BF bezeichnet, und ein dafür vorgesehener Frequenzmodulator, der mit einer Trägerfrequenz $f_b$ arbeitet, ist mit dem Bezugszeichen 10 versehen. Ein Bildfernsprechsignal wird also ebenso wie ein Fernsehsignal behandelt.

Die an den Ausgängen der gezeigten Modulatoren erscheinenden frequenzmodulierten Träger werden in einem Leistungsaddierer 11 zu einem Frequenzmultiplex-Signal zusammengefaßt. Dieses wird anschließend mit einem Leistungsverteiler 12 auf mehrere Leitungen verteilt, da es auf mehrere Übertragungsstrecken, die zu verschiedenen Teilnehmern oder Teilnehmergruppen führen, gegeben werden soll. Eine solche Übertragungsstrecke, die zu einem Teilnehmer oder einer Gruppe von Teilnehmern führt, ist in Fig. 1 durch weitere Einrichtungen angedeutet. Hierzu gehört ein Elektrisch-optisch-Wandler 13, der das Frequenzmultiplex-Signal in ein optisches Signal durch Intensitätsmodulation eines in ihm enthaltenen Lasers, der z.B. eine Betriebswellenlänge von 1500 nm hat, umwandelt. Dieses optische Signal wird über einen Lichtwellenleiter 14 zu einem Teilnehmer oder einer Gruppe von Teilnehmern übertragen.

Von diesem Teilnehmer wird möglicherweise auch ein Bildfernsprechsignal zur Zentrale gesendet. Dies geschieht im gezeigten Beispiel mittels eines optischen Signals einer zweiten Wellenlänge 1300 nm, das von dem Teilnehmer zur Zentrale gesendet wird. In der Zentrale wird, wie gezeigt, dieses optische Signal aus dem Lichtwellenleiter 14 ausgekoppelt, in einem Optisch-elektrisch-Wandler 15 in ein elektrisches Signal umgesetzt, dieses anschließend in einem Frequenzdemodulator 16 demoduliert, so daß an dessen Ausgang ein analoges Bildfernsprechsignal BF in Basisbandlage entsteht. Die Frequenz des in den Demodulator 16 einzugebenden Trägers ist mit f bezeichnet. Ein Bildfernsprechsignal wird also von einem Teilnehmer dadurch zur Zentrale gesendet, daß es einem Träger mit der Trägerfrequenz f durch Frequenzmodulation aufmoduliert, daß dieses modulierte Trägersignal in ein optisches Signal mit einer zweiten Wellenlänge von 1300 nm umgesetzt und dieses über denselben Lichtwellenleiter 14 zur Zentrale übertragen wird, über den auch die von der Zentrale zum Teilnehmer zu übertragenden Fernsehsignale übertragen werden.

Der Frequenzplan der zur Übertragung von der Zentrale zu den Teilnehmern verwendeten Träger, die in der Literatur bisweilen auch als Unterträger (engl.: subcarriers) bezeichnet werden, wird anhand von Fig. 2 erläutert.

In einem ersten Frequenzbereich von 0,95 bis 1,75 GHz liegen bis zu 20 Trägerfrequenzen, jeweils in einem Mindestabstand von $\Delta f = 40$ MHz. Zur Übertragung von Signalen aus 20 Breitband-Kanälen (Fernseh- oder Bildfernsprech-Kanälen) wird also dieses Frequenzband belegt. Bezogen auf die unterste Frequenz dieses Frequenzbandes ist es weniger als eine Oktave breit, so daß Intermodulationsprodukte Frequenzen haben, die außerhalb dieses Frequenzbandes liegen. Die dominanten Intermodulationsprodukte liegen in der "anschließenden" Oktave.

Zur Verarbeitung von modulierten Trägern, deren Trägerfrequenzen in diesem Frequenzband von 0,95 bis 1,75 GHz liegen, stehen bereits heutzutage aus der Satelliten-Übertragungstechnik die Modulatoren und Demodulatoren zur Verfügung, insbesondere sind empfangsseitig die handelsüblichen Satelliten-TV-Empfänger verwendbar. In einer ersten Phase der Einführung des Kabelfernsehens über Lichtwellenleiter kann also eine Übertragungskapazität von 20 Breitbandkanälen bereitgestellt werden, wobei als Übertragungseinrichtungen preisgünstige Komponenten und Geräte verwendbar sind.

Falls die Übertragungskapazität auf über 20 Kanäle erhöht werden soll, z.B. in einer späteren Phase der Einführung, werden erfindungsgemäß weitere Trägerfrequenzen verwendet, die in einem Frequenzband von 3,5 bis 4,3 GHz liegen. Auch in diesem Band sind 20 Trägerfrequenzen mit demselben Nachbarabstand wie im ersten Frequenzband möglich, d.h. durch die Belegung dieses zweiten Frequenzbandes steht insgesamt eine Übertragungskapazität von 40 Kanälen zur Verfügung.

Auch dieses zweite Frequenzband ist bezogen auf seine untere Frequenz von 3,5 GHz weniger als eine Oktave breit, und zwischen dem ersten und dem zweiten Frequenzband besteht ein unbelegter Zwischenraum, der mindestens eine Oktave breit ist, so daß eventuelle Intermodulationsprodukte aus dem ersten Frequenzband mit keinen weiteren Trägern aus dem zweiten Frequenzband in der Frequenz zusammenfallen.

Ein drittes Frequenzband von 8,6 bis 11,0 GHz kann weitere 60 Trägerfrequenzen enthalten, so daß es eine Übertragungskapazität für 60 Breitbandkanäle bietet. Auch dieses dritte Frequenzband ist bezogen auf seine untere Frequenz von 8,6 GHz höchstens eine Oktave breit, und hat einen Abstand vom zweiten Frequenzband, der bezogen auf dessen obere Frequenz von 4,3 GHz mindestens eine Oktave breit ist.

Der Grund für die Breite der Frequenzbänder und der dazwischenliegenden unbelegten Frequenzbereiche sind die bei der Modulation der Träger entstehenden Intermodulationsprodukte, die die verwendeten Träger nicht stören dürfen. Dadurch wird die Einhaltung des geforderten Signal-zu-Rausch-Abstands erleichtert. Die Aufteilung in die verschiedenen Bänder erlaubt außerdem eine stufenweise Anpassung an den Kanalbedarf von 20 auf 40 und auf 100 Kanäle unter Hinzunahme der jeweils für das betreffende Frequenzband ausgelegten übertragungstechnischen Einrichtungen.

Ein Anstieg des Kanalbedarfs kann z.B. entstehen, wenn mehrere Kommunikationsdienste eingeführt werden sollen. Somit erlaubt das beschriebene System eine stufenweise Einführung der Inanspruchnahme mehrerer Dienste, z.B. Übertragung einer ersten Menge von Fernsehprogrammen, Übertragung einer zweiten Menge von Fernsehprogrammen, Bildfernsprechen und HDTV.

Ein zweiter Grund für die Breite der Frequenzbänder ist die Tatsache, daß die übertragungstechnischen Baugruppen wie HF-Verstärker, Leistungsteiler, Leistungsaddierer, optische Sender, optische Empfänger und FM-Empfänger besonders kostengünstig und technisch elegant realisiert werden können, wenn ihre Bandbreite nicht größer als eine Oktave sein muß.

Ein großer Teil der Trägerfrequenzen des zweiten Frequenzbandes gehört zum sogenannten C-Band, so daß zur Verarbeitung übertragungstechnische Einrichtungen, die für das C-Band ausgelegt sind, z.B. handelsübliche Satelliten-C-Band-Konverter, verwendbar sind. Die Trägerfrequenzen des dritten Bandes liegen zum überwiegenden Teil im X-Band, so daß auch für sie gebräuchliche Einrichtungen, z.B. X-Band-Konverter, verwendet werden können.

Die im C- oder X-Band liegenden Trägerfrequenzen des zweiten bzw. des dritten Frequenzbandes werden vorzugsweise zur Übertragung der oben erwähnten HDTV-Signale verwendet. Wegen der größeren Bandbreite der HDTV-Signale gegenüber gewöhnlichen Fernsehsignalen ist dann ein entsprechend größerer Abstand zu benachbarten Trägerfrequenzen erforderlich.

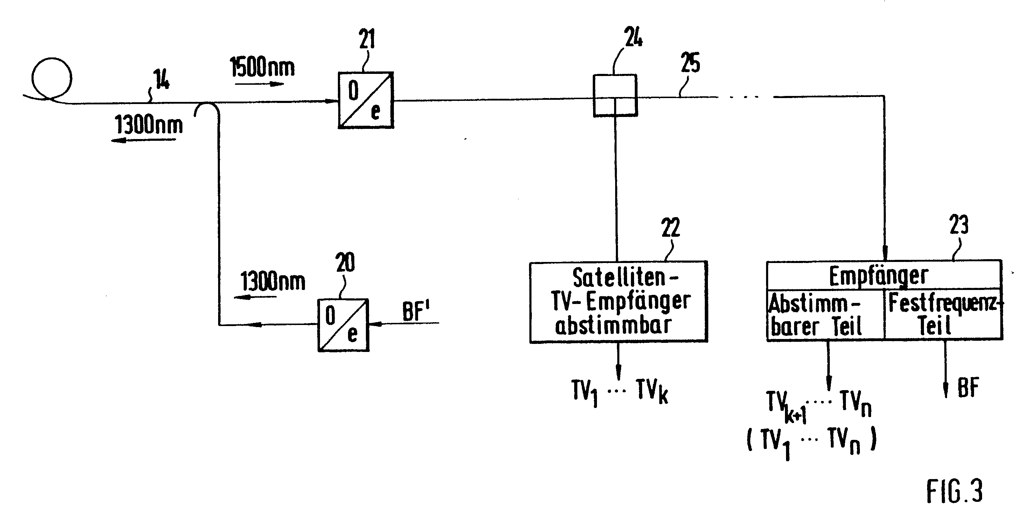

Anhand von Fig. 3 werden nun die mit den Einrichtungen nach Fig. 1 zusammenarbeitenden teilnehmerseitigen Einrichtungen erläutert.

Über den in Fig. 1 gezeigten Lichtwellenleiter 14 empfängt die teilnehmerseitige Einrichtung nach Fig. 3, wie oben im Zusammenhang mit Fig. 1 erläutert wurde, ein optisches Signal mit einer Wellenlänge von 1500 nm, das die Breitbandsignale, z.B. die Fernsehsignale, enthält. In einem Optisch-elektrisch-Wandler 21 wird dieses optische Signal in ein elektrisches Signal umgewandelt. Falls dieses nur modulierte Träger mit Trägerfrequenzen im ersten Frequenzband von 0,95 bis 1,75 GHz enthält, wird es in einen FM-Mikrowellenempfänger, z.B. einen handelsüblichen Satelliten-TV-Empfänger 22, eingegeben, der abstimmbar ist und an seinem Ausgang wahlweise eines der übertragenen Fernsehsignalen, mit $TV_1$ bis $TV_k$ bezeichnet, für das Fernseh-Empfangsgerät bereitstellt.

Falls das empfangene Signal nicht nur modulierte Träger mit Frequenzen aus dem ersten Frequenzband, sondern auch modulierte Träger aus den anderen Frequenzbändern enthält und der Teilnehmer diese auch empfangen will, genügt der Satelliten-TV-Empfänger nicht. In diesem Falle kann das empfangene Signal auf einen weiteren Empfänger 23, z.B. einen Satelliten-TV-Empfänger mit vorgeschaltetem Satelliten-C-Band-Konverter, gegeben werden, der den Empfang der weiteren Signale erlaubt. Falls der Teilnehmer den Dienst des Bildfernsprechens in Anspruch nehmen will, so kann sein Empfänger 23 außer einem abstimmbaren Teil noch einen Festfrequenz-Teil haben, der fest auf die Trägerfrequenz, die zur Übertragung des Bildfernsprech-Signals vorgesehen ist, abgestimmt ist, und an seinem Ausgang das Bildfernsprech-Signal BF abgibt. Der abstimmbare Teil kann entweder so ausgelegt sein, daß er nur die nicht vom Satelliten-TV-Empfänger verarbeitbaren Signale verarbeiten kann, oder er kann so ausgelegt sein, daß er sämtliche Signale mit Trägerfrequenzen aus allen drei Frequenzbändern empfangen kann. Im letzteren Falle wäre der Empfänger 23 ein echter Universal-Empfänger.

In Fig. 3 ist der Fall dargestellt, daß das Empfangssignal mittels eines Leistungsteilers 24 auf den Satelliten-TV-Empfänger 22 und eine weiterführende Leitung 25 verteilt wird, wobei der Satelliten-TV-Empfänger 22 zum Empfang von Fernsehsignalen $TV_1$ bis $TV_k$ aus dem ersten Frequenzbereich geeignet ist und an die weiterführende Leitung 25 ein Empfänger 23 anschließbar ist, der zum Empfang der übrigen Fernsehsignale $TV_{k+1}$ bis $TV_n$ und des Bildfernsprech-Signals geeignet ist.

Dies zeigt, daß auch hinsichtlich der verwendbaren Empfangsgeräte der Frequenzplan des erfindungsgemäßen Systems den Vorteil hat, daß eine stufenweise Anpassung an den Kanalbedarf oder eine stufenweise Inanspruchnahme verschiedener Kommunikationsdienste möglich ist. Selbstverständlich ist es auch möglich, einen Universal-Empfänger, ohne daß ein Satelliten-TV-Empfänger verwendet wird, als einzigen Empfänger mit dem Ausgang des Optisch-elektrisch-Wandlers 21 zu verbinden und ihn zum Empfang von sämtlichen Fernsehsignalen $TV_1$ bis $TV_n$ aus sämtlichen Frequenzbändern zu verwenden.

Möglich ist es auch, den Leistungsteiler 24 mit einer Frequenzweiche zu versehen, so daß im Falle von mehreren Empfängern durch eine Vorselektion dafür gesorgt werden kann, daß einer der Empfänger nur einen Teil der insgesamt übertragenen Signale empfangen kann, z.B. zur Unterscheidung zwischen den Diensten "gewöhnliches Fernsehen" und HDTV oder zwischen den Diensten "gewöhnliches Fernsehen" und "bezahltes Fernsehen" ("pay-TV").

Ein wesentlicher Vorteil für die Teilnehmer liegt darin, daß sie die Wahl haben, mehr oder weniger aufwendige Empfänger zu betreiben, je nachdem, ob sie mehr oder weniger Kommunikationsdienste in Anspruch nehmen wollen.

Falls der Teilnehmer den Breitbanddienst des Bildfernsprechens in Anspruch nehmen will, hat die teilnehmerseitige Einrichtung einen Elektrisch-optisch-Wandler 20, der ein Bildfernsprech-Signal von einem nicht gezeigten Bildfernsprech-Endgerät in ein optisches Signal mit einer Wellenlänge von z.B. 1300 nm umsetzt, das in den Lichtwellenleiter 14 eingekoppelt wird, der die teilnehmerseitige Einrichtung mit der in Fig. 1 gezeigten Einrichtung in der Zentrale verbindet.

Es sei noch darauf hingewiesen, daß statt der beschriebenen Art der Übertragung von Analog-Signalen durch Frequenzmodulation die Signale auch als digitale Signale übertragen werden können, wobei dann zweckmäßigerweise statt der Frequenzmodulation eine Phasenumtastmodulation, auch PSK-Modulation (PSK = phase shift keying) angewendet wird. Auch können die Bildfernsprech-Signale auf andere als die beschriebene Weise übertragen werden, z.B. als digitale PCM-Signale.

## Ansprüche

1. System zur optischen Übertragung einer Vielzahl von Breitbandsignalen ($TV_1$ bis $TV_n$, BF), insbesondere Fernsehprogramme enthaltenden Signalen, mit einer sendeseitigen Übertragungseinrichtung, enthaltend Modulatoren (1 bis n, 10), die die Breitband-Signale verschiedenen Trägern aufmodulieren, und eine Schaltung (11), die die modulierten Träger zu einem zu übertragenden Frequenzmultiplexsignal zusammenfaßt, und mit einer empfangsseitigen Einrichtung, enthaltend Demodulatoren, die aus dem empfangenen Frequenzmultiplexsignal die verschiedenen Breitbandsignale wiedergewinnt,
**dadurch gekennzeichnet,**
daß in den Modulatoren (1 bis n, 10) und Demodulatoren (22, 23) Trägerfrequenzen ($f_1$ bis $f_n$, $f_b$) verwendet sind, die in verschiedenen Frequenzbändern ($B_1$, $B_2$, $B_3$) liegen, die höchstens eine Oktave breit sind und mindestens eine Oktave auseinanderliegen.

2. System nach Anspruch 1, dadurch gekennzeichnet, daß von den verschiedenen Frequenzbändern ein erstes Frequenzband ($B_1$) den Bereich von 0,95 bis 1,75 GHz, ein zweites Frequenzband ($B_2$) den Bereich von 3,5 bis 4,3 GHz und ein drittes Frequenzband ($B_3$) den Bereich von 8,6 bis 11,0 GHz umfaßt.

3. System nach Anspruch 1 oder 2, dadurch gekennzeichnet, daß die Trägerfrequenzen in den Frequenzbändern mindestens einen Abstand von 40 MHz voneinander haben.

4. System nach einem der vorstehenden Ansprüche, dadurch gekennzeichnet, daß zu den Breitbandsignalen auch Bildfernsprech-Signale gehören, die entsprechend den übrigen Breitbandsignalen Trägern aufmoduliert und gemeinsam mit diesen zu einem Frequenzmultiplex-Signal zusammengefaßt werden.

5. System nach einem der vorstehenden Ansprüche, dadurch gekennzeichnet, daß zu den Breitbandsignalen auch digitale Datensignale mit Bitfolgefrequenzen bis zu 10 Mbit/s oder PCM-30-Signale gehören, die entsprechend den übrigen Breitbandsignalen Trägern aufmoduliert und gemeinsam mit diesen zu einem Frequenzmultiplex-Signal zusammengefaßt werden.

6. System nach Anspruch 4 oder 5, dadurch gekennzeichnet, daß über einen Lichtwellenleiter (14) in einer ersten Übertragungsrichtung die Breitbandsignale wie vorstehend beschrieben übertragen werden, wobei die optische Übertragung mit einer ersten Wellenlänge erfolgt, und daß über denselben Lichtwellenleiter (14) unter Verwendung einer zweiten Lichtwellenlänge Bildfernsprech-Signale und/oder digitale Datensignale und/oder PCM-Signale in der Gegenrichtung übertragen werden.

FIG.1

FIG.2

R. Heidemann 2
12. 5. 89

FIG.3

EP 0 380 945 A2

R.Heidemann 2
12. 5. 89